# EUROPÄISCHE PATENTSCHRIFT

(11) **EP 0 563 818 B1**
(45) Veröffentlichungstag und Bekanntmachung des Hinweises auf die Patenterteilung: **05.06.1996**
(21) Anmeldenummer: 93105015.7
(22) Anmeldetag: 26.03.1993
(51) Int. Cl.: C08L 23/10, C08L 23/20

(54) **Polyolefin-Formmasse mit hoher Steifigkeit und Härte**
High rigidity and high hardness polyolefin composition
Composition de polyoléfine à haute rigidité et dureté

(30) Priorität: 31.03.1992 DE 4210581
(43) Veröffentlichungstag der Anmeldung: 06.10.1993
(73) Patentinhaber: HOECHST AKTIENGESELLSCHAFT, D-65926 Frankfurt am Main (DE)
(72) Erfinder: Winter, Andreas, Dr., W-6246 Glashütten/Taunus (DE); Bachmann, Bernd, Dr., W-6239 Eppstein/Taunus (DE)

(56) Entgegenhaltungen:
- EP-A- 0 321 852
- EP-A- 0 384 263
- EP-A- 0 433 986
- EP-A- 0 466 926
- WO-A-91/14718

## Beschreibung

Die Erfindung bezieht sich auf eine sehr harte und steife Polyolefinformmasse, die aus einem niedermolekularen Polyolefin (Polyolefinwachs) und einer hochmolekularen Polyolefinkomponente besteht.

Die Herstellung von Polyolefinen mit relativ hoher Härte ist bekannt. Zu diesem Zweck wird angestrebt, ein möglichst von ataktischen Anteilen freies Polyolefin zu erzeugen. Dies gelingt entweder direkt durch eine spezielle Reaktionsführung in der Polymerisation oder durch nachträgliche Extraktion der gebildeten ataktischen Anteile aus dem Polymerprodukt. Diese Verfahren sind Stand der Technik, die so erzielbaren Härten sind für eine Vielzahl von Anwendungen jedoch nicht ausreichend (vgl. z. B. EP-A 336 127).

Werden solche Polyolefine durch Zumischung von Kautschuken in ihren Schlagzäheigenschaften verbessert, bleibt die Härte zwar immer noch relativ hoch ist, aber auch für die damit eröffneten Anwendungen, beispielsweise im Automobilbau, zu gering.

Ferner ist bekannt, höhere Härten bei Polymeren durch eine breite Molmassenverteilung zu erzeugen (vgl. DE-P 41 17 259.0). Die so erzielbaren Härten sind jedoch für viele Anwendungen ebenfalls noch nicht ausreichend.

Aufgabe der vorliegenden Erfindung war somit die Bereitstellung einer Formmasse, welche die aus dem Stand der Technik bekannten nachteiligen Eigenschaften nicht aufweist, d. h. einer Formmasse, die durch hohe Steifigkeit und hohe Härte gekennzeichnet ist und gegebenenfalls durch Copolymeranteile schlagzähmodifiziert sein kann.

Es wurde überraschend gefunden, daß bestimmte Polyolefinformmassen, die durch Direktpolymerisation (Herstellung im Polymerisationsreaktor als sogenannte Reaktorblends) oder durch Schmelzmischen der einzelnen Komponenten hergestellt werden können, den genannten Anforderungen genügen.

Gegenstand der vorliegenden Erfindung ist somit eine Polyolefinformmasse, im wesentlichen bestehend aus
a) einem Polyolefinwachs, welches sich von einem Olefin mit mindestens 3 C-Atomen der Formel R^{a}-CH = CH-R^{b} ableitet, worin R^{a} und R^{b} gleich oder verschieden sind und Wasserstoff oder C₁-C₁₅-Alkyl bedeuten oder R^{a} und R^{b} mit den sie verbindenden Atomen einen Ring bilden, mit einer Molmasse M_{w} von 1000 bis 50000 g/mol, einer Molmassendispersität M_{w}/Mₙ von 1,8 bis 4,0, einer Viskositätszahl von 2 bis 50 cm³/g, einem Schmelzpunkt von 120 bis 160°C
   und
b) einem Polyolefin, welches sich von dem unter a) genannten Olefin ableitet, mit einer Molmasse M_{w} > 100 000 g/mol, einer Molmassendispersität M_{w}/Mₙ von 1,8 bis 4,0, einer Viskositätszahl > 80 cm³/g und einem Schmelzpunkt von 120 bis 160°C oder anstelle von b)
c) einem Olefincopolymer, welches sich von mindestens zwei verschiedenen Olefinen der Formel R^{a}-CH = CH-R^{b} ableitet, worin R^{a} und R^{b} gleich oder verschieden sind und Wasserstoff oder C₁-C₁₅-Alkyl bedeuten oder R^{a} und R^{b} mit den sie verbindenden Atomen einen Ring bilden, mit einer Molmasse
   M_{w} > 100 000 g/mol, einer Molmassendispersität M_{w}/Mₙ von 1,8 bis 4,0, einer Viskositätszahl > 80 cm³/g und einem Schmelzpunkt von 90 bis 160°C.

Die niedermolekulare Komponente a) bzw. deren Herstellung ist bekannt und beispielsweise in EP-A 321 852 oder EP-A 416 566 und in den Ausführungsbeispielen beschrieben. Bei der Komponente a) handelt es sich bevorzugt um ein Polypropylenwachs.

Polyolefine b) und deren Herstellung sind bekannt; vgl. z. B. DE-P40 35 886.0 (= EP-Anmeldung Nr. 91 118 681.5) und die Ausführungsbeispiele. Es handelt sich um hochmolekulare, isotaktische Homopolymere, von denen insbesondere Polypropylen zu nennen ist.

Die hochmolekularen Copolymere c) bzw. deren Herstellung sind z. B. in EP-A 365 974, EP-A 384 263, DE-P 40 35 886.0 und den Ausführungsbeispielen beschrieben. Insbesondere bevorzugt sind hier Ethylen/Propylen-Copolymere.

Der Anteil der Komponenten a) und b) bzw. a) und c) in der erfindungsgemäßen Polyolefinformmasse kann innerhalb weiter Grenzen variieren. Bevorzugt sind Zusammensetzungen, welche die Komponente a) (Polyolefinwachs) zu 5-90 Gew.-%, bevorzugt zu 10-80 Gew.-%, insbesondere zu 20-70 Gew.-%, enthalten.

Der erfindungsgemäßen Formmasse (a/b bzw. a/c) kann zur Erhöhung der Schlagzähigkeit ein geeigneter Kautschuk zugemischt werden. Die Herstellung kann auch durch direkte Polymerisation als sog. Polymerblend erfolgen. Auch solche Formmassen sind Gegenstand der vorliegenden Erfindung.

In diesem Fall setzt sich die Formmasse zu 20 bis 99 Gew.-%, vorzugsweise 45 bis 95 Gew.-%, aus der eingangs beschriebenen Formmasse bestehend aus a) und b) bzw. a) und c) und zu 1 bis 80, vorzugsweise 5 bis 55 Gew.-%, aus einem Kautschuk mit einer Glastemperatur unter -20°C zusammen.

Geeignete Kautschuke sind beispielsweise Styrol-Butadien-Kautschuke, Silikonkautschuke, Ethylen-Propylen-Kautschuke (EPM) oder Ethylen-Propylen-Dien-Kautschuke (EPDM). EPM- und EPDM-Kautschuke können zusätzlich noch bis zu 40 % Polyethylen enthalten. Als Dien-Komponente kann 1,4-Hexadien, Norbornadien oder Cyclopentadien in einer Menge bis zu 10 Gew.-%, bezogen auf die Gesamtkautschukmenge, enthalten sein.

Der Gehalt an Ethylen und Propylen ist nicht begrenzt, solange eine Glastemperatur der amorphen Komponente von weniger als -20°C erreicht wird.

Eine typische Zusammensetzung für handelsübliche EPM-Kautschuke ist beispielsweise 10-60% Propyleneinheiten und 90-40 Gew.-% Ethyleneinheiten. Von den Ethyleneinheiten entfallen dabei 0-40 Gew.-% auf einen reinen Polyethylenanteil, der Rest bildet zusammen mit dem Propylen den Copolymeranteil.

Entsprechend zusammengesetzt sind EPDM-Kautschuke, im Copolymeranteil sind neben Propylen und Ethylen jedoch zusätzlich noch 1-10 Gew.-% eines Diens vom oben erwähnten Typ eingebaut. Die Schmelzviskosität typischer EPM- und EPDM-Kautschuke liegt zwischen 0,5 und 300 g/10 min (MFI 230/5).

Die Mooney-Viskosität (gemessen bei 121°C, ML) liegt typisch zwischen 20 und 80. Die Streckspannung bei 60 % Dehnung beträgt typisch 10-300 psi (pound/sq inch, 1 psi = 6894,8 kg/m sec² = 1 Pa).

Typisch verwendbare Kautschuke sind beispielsweise unter den zur Zeit bestehenden Handelsnamen Vistalon, Exxelor (Exxon Chemicals), Dutral (Dutral S.A.), Nordel (DuPont) oder Buna (Veba) auf dem Markt.

Außer den Komponenten a) und b) bzw. a) und c) und dem Kautschuk kann die erfindungsgemäße Formmasse noch die üblichen Zusatzstoffe enthalten, beispielsweise Stabilisatoren, Antioxidantien, UV-Absorber, Lichtschutzmittel, Metalldesaktivatoren, Radikalfänger, Füllstoffe und Verstärkungsmittel, Compatibilizer, Weichmacher, Gleitmittel, Emulgatoren, Pigmente, optische Aufheller, Flammschutzmittel, Antistatika, Treibmittel.

Die Herstellung der erfindungsgemäßen Formmasse findet entweder durch direkte Polymerisation und nachgeschaltetes Zumischen von Zusatzstoffen statt, oder ein Teil der erfindungsgemäßen Formmasse wird in direkter Polymerisation hergestellt und dann mit weiteren Komponenten und den Zusatzstoffen gemischt, oder alle Komponenten der Formmasse werden getrennt hergestellt und zusammen mit den Zusatzstoffen gemischt.

Dieses Mischen kann nach den in der Kunststoffverarbeitung für das Mischen von Polymeren und Zusatzstoffen üblichen Methoden erfolgen.

Eine Möglichkeit ist das Sintern in einem schnellaufenden Mischer, wenn alle Bestandteile der Formmasse pulverförmig sind.

Eine weitere Möglichkeit ist der Einsatz eines Extruders mit Misch- und Knetorganen auf der Schnecke.

Schließlich sind auch Kneter, wie sie in der Gummi- und Kautschukindustrie eingesetzt werden, geeignete Mischmaschinen.

Die Mischtemperatur ist abhängig von der jeweiligen Zusammensetzung der Formmasse und läßt sich durch einfache Routineversuche ermitteln.

Die erfindungsgemäße Formmasse zeichnet sich durch hohe Härte aus. Formmassen, die Copolymere oder Copolymerblends und/oder Kautschuk enthalten sind durch ein sehr gutes Härte-Schlagzähigkeits-Verhältnis, insbesondere auch bei Temperaturen unter 0°C, gekennzeichnet. Generell sind diese Formmassen in Form von extrudierten, gespritzten, geschäumten oder geblasenen Formkörpern überall dort verwendbar, wo hohe Steifigkeit, Härte, Maßhaltigkeit und Kratzfestigkeit erwünscht ist. Durch die Verwendung von Copolymer/Kautschuk-Anteilen in der Formmasse wird die Anwendbarkeit auf Anwendungsgebiete erweitert, die diese Eigenschaften in Kombination mit Schlagzähigkeit, Reiß- und Biegefestigkeit erfordern. Im Automobilbau sind solche Formmassen beispielsweise für Seitenschutzleisten, Spoiler, Dichtungen, Kotflügelauskleidungen, Stoßfängerwerkstoffe, LKW- und Traktorenkotflügel, kratzfeste KFZ-Innenausstattung oder Radkappen einsetzbar.

Ferner eignet sich die erfindungsgemäße Formmasse beispielsweise auch zur Herstellung von reißfesten Folien, Membranfiltern, Fasern und Filamenten. Die folgenden Beispiele sollen die Erfindung näher erläutern:
- M_{w} =: Molmassengewichtsmittel (g/mol), ermittelt durch Gelpermeationschromatographie
- II =: Isotaxie-Index (durch ¹³C-NMR Spektroskopie).
- nᵢₛₒ =: Mittlere isotaktische Kettenlänge (durch ¹³C-NMR).
- n_{PE} =: Mittlere Blocklänge Polyethylen.
- VZ =: Viskositätszahl gemessen bei 135°C als 0,1 %ige Lösung in Decahydronaphthalin im Kapillarviskosimeter.
- MFI230/5 =: Schmelzindex bei 230°C, 5 kg Belastung, nach DIN 53 735
- M_{w}/Mₙ =: Molmassendispersität, ermittelt durch Gelpermeationschromatographie

Bestimmung der Schmelzpunkte mit DSC (20°C/min)
- KDH =: Kugeldruckhärte (in Anlehnung an DIN 53 456, 4 mm dicke Preßplatten)
- aₖᵥ =: Kerbschlagzähigkeit nach DIN 53 453, gemessen an Preßplatten entnommenen Normkleinstäben (50x6x4 mm) mit V-Kerbe (Flankenwinkel 45°, Kerbtiefe 1,3 mm, Kerbradius 1 mm).
Zug-E-Modul: gemessen nach DIN 53 497-Z (Spritzkörper)
Jzod-Schlag- und Kerbschlagzähigkeiten: gemessen nach ISO 180/1C bzw. ISO 180/1A.

Für die Herstellung der Formmassen wurde ein Doppelschneckenextruder ZSK 28 (Fa. Werner & Pfleiderer) verwendet.

### A) Herstellung der Katalysatoren rac-Dimethylsilyl(2-methyl-1-indenyl)₂zirkondichlorid und rac-Ethylen(2-methyl-1-indenyl)₂zirkondichlorid

I) Synthese von 2-Me-Inden
   110,45g (0,836 mol) 2-Indanon wurden in 500 cm³ Diethylether gelöst und 290 cm³ 3 n (0,87 mol) etherische Methylgrignardlösung so zugetropft, daß leicht refluxierte. Nach 2 h Kochen unter leichtem Rückfluß wurde auf eine Eis/Salzsäure-Mischung gegeben und mit Ammoniumchlorid ein pH von 2-3 eingestellt. Die organische Phase wurde abgetrennt und mit NaHCO₃ und Kochsalzlösung gewaschen und getrocknet. Es wurden 98 g Rohprodukt (2-Hydroxy-2-methyl-indan) erhalten, welches nicht weiter gereinigt wurde.
   In 500 cm³ Toluol wurde dieses Produkt gelöst, mit 3 g p-Toluolsulfonsäure am Wasserabscheider bis zur Beendigung der Wasserabspaltung erhitzt, eingeengt, in Dichlormethan aufgenommen und über Silicagel filtriert und im Vakuum destilliert (80°C/10 mbar).
   Ausbeute: 28,49 g (0,22 mol, 26 %).
   Die Synthese dieser Verbindung ist auch beschrieben in:
   C.F. Koelsch, P.R. Johnson, J. Am. Chem. Soc., 65 (1943) 567-573.
II) Synthese von (2-Me-lnden)₂SiMe₂
   13 g (100 mmol) 2-Me-Inden wurde in 400 cm³ Diethylether gelöst und 62,5 cm³ 1,6 n (100 mmol) n-Butyllithium-n-Hexan-Lösung innerhalb 1 h unter Eiskühlung zugetropft und dann 1 h bei ∼ 35°C nachgerührt.
   6,1 cm³ (50 mmol) Dimethyldichlorsilan wurden in 50 cm³ Et₂O vorgelegt und bei 0°C die Lithiosalzlösung innerhalb von 5 h zugetropft, über Nacht bei Raumtemperatur gerührt und über das Wochenende stehen gelassen.
   Vom abgesetzten Feststoff wurde abfiltriert und zur Trockne eingedampft. Nach Extraktion mit kleinen Portionen n-Hexan wurde filtriert und eingeengt. Es fielen 5,7 g (18,00 mmol) eines weißen Kristallisats an. Die Mutterlauge wurde eingeengt und dann säulenchromatographisch (n-Hexan/H₂CCl₂ 9:1 vol.) gereinigt, wobei nochmals 2,5 g (7,9 mmol - 52 %) Produkt (als Isomerengemisch) anfielen.
   r_{F} (SiO₂; n-Hexan/H₂CCl₂ 9:1 vol.) = 0,37
III) Synthese von (2-Me-Ind)₂CH₂CH₂
   3 g (23 mmol) 2-Me-Inden wurden in 50 cm³ THF gelöst und 14,4 cm³ 1,6 n (23,04 mmol) n-Butyllithium-n-Hexan-Lösung zugetropft und dann 1 h bei 65°C gerührt. Danach wurde 1 ml (11,5 mmol) 1,2-Dibromethan bei -78°C zugegeben, auf Raumtemperatur erwärmen lassen und 5 h gerührt. Nach Eindampfen wurde säulenchromatographisch gereinigt (SiO₂; n-Hexan/H₂CCl₂ 9:1 vol.).
   Die produkthaltigen Fraktionen wurden vereinigt, eingedampft und in trockenem Ether aufgenommen, über MgSO₄ getrocknet, filtriert und das Lösemittel abgezogen.
   Ausbeute: 1,6 g (5,59 mmol - 49 %) an Isomerengemisch
   r_{F} (SiO₂; n-Hexan/H₂CCl₂ 9:1 vol.) = 0,46
IV) Synthese von rac-Dimethylsilyl(2-Me-1-indenyl)₂-zirkondichlorid
   1,68 g (5,31 mmol) des Chelatliganden Dimethylsilyl(2-methylinden)₂ wurden in 50 cm³ THF gegeben und 6,63 cm³ einer 1,6 n (10,61 mmol) n-BuLi-n-Hexan-Lösung zugetropft. Die Zugabe erfolgte bei Umgebungstemperatur innerhalb 0,5 h. Nach 2 stündigem Rühren bei ca. 35°C wurde das Lösungsmittel im Vakuum abgezogen und der Rückstand mit n-Pentan verrührt, abfiltriert und getrocknet.
   Das so erhaltene Dilithiosalz wurde bei -78°C zu einer Suspension von 1,24 g (5,32 mmol) ZrCl₄ in 50 cm³ CH₂Cl₂ gegeben und die Mischung 3 h bei dieser Temperatur gerührt. Nach Erwärmung auf Raumtemperatur über Nacht, wurde eingedampft. Das 1-H-NMR-Spektrum zeigte, neben dem Vorliegen von etwas ZrCl₄(thf)₂, ein rac-meso-Gemisch. Nach Verrühren mit n-Pentan und Trocknen wurde der feste, gelbe Rückstand in THF suspendiert, abfiltriert und NMR-spektroskopisch untersucht. Diese drei Arbeitsschritte wurden mehrmals wiederholt; schließlich wurden 0,35 g (0,73 mmol - 14 %) Produkt erhalten, in dem die rac-Form, nach 1-H-NMR, auf mehr als 17:1 angereichert war.
V) Synthese von rac-Ethylen(2-Me-1-indenyl)₂-zirkondichlorid
   Zu 5,07 g (17,7 mmol) Ligand Ethylen(2-methylinden)₂ in 200 cm³ THF wurde bei Raumtemperatur 14,2 cm³ 2,5 n (35,4 mmol) n-BuLi-n-Hexan-Lösung innerhalb 1 h zugetropft und dann 3 h bei ca. 50°C gerührt. Dabei geht ein zwischenzeitlich gebildeter Niederschlag wieder in Lösung. Über Nacht wurde stehengelassen.
   6,68 g (17,7 mmol) ZrCl₄(thf)₂ in 250 cm³ THF wurden simultan mit obiger Dilithiosalzlösung zu ca. 50 cm³ THF bei 50°C zugetropft und dann 20 h bei dieser Temperatur gerührt. Der Toluolextrakt des Eindampfrückstands wurde eingedampft. Nach Extraktion des Rückstands mit wenig THF wurde aus Toluol umkristallisiert. Dabei wurden 0,44 g (0,99 mmol - 5,6 %) Produkt erhalten, wobei die rac-Form besser als 15:1 angereichert war.

### B) Polymerisation:

### B1) Herstellung der Komponente a) gemäß EP-A 321 852 und EP-A 416 566.

### Beispiel 1

Ein trockener 24 dm³-Reaktor wurde mit 12 dm³ flüssigem Propylen und mit 100 Ndm³ Wasserstoff befüllt.
Dann wurden 35 cm³ toluolische Methylaluminoxanlösung (entsprechend 52 mmol Al, mittlerer Oligomerisierungsgrad n = 20) zugegeben und der Ansatz bei 30°C 15 Minuten gerührt.
Parallel dazu wurden 3,5 mg (0,008 mmol) rac-Dimethylsilylbis(1-indenyl)-zirkondichlorid in 13,5 cm³ toluolischer Methylaluminoxanlösung (20 mmol Al) gelöst und durch 15minütiges Stehenlassen voraktiviert.

Diese Lösung wurde dann in den Reaktor gegeben. Das Polymerisationssystem wurde auf eine Temperatur von 70°C gebracht und durch Kühlung 1 h bei dieser Temperatur gehalten. Die Metallocenaktivität war 943 kg PP/g Metallocen x h.
VZ = 18cm³/g; M_{w} = 9600 g/mol, M_{w}/Mₙ = 2,0; II = 94,9 % nᵢₛₒ = 35; Schmp.: 145°C.

### Beispiel 2

Es wurde verfahren wie in Beispiel 1, verwendet wurden jedoch 4,7 mg (0,009 mmol) rac-Dimethylsilylbis(2-methyl-1-indenyl)zirkondichlorid.
Es wurden 2,55 kg Polypropylen erhalten, entsprechend einer Metallocenaktivität von 543 kg PP/g Metallocen x h.
VZ = 32 cm³/g; M_{w} = 12500 g/mol, M_{w}/Mₙ = 2,3; II = 96,5 %, Schmp.: 146°C.

### Beispiel 3

Es wurde verfahren wie in Beispiel 1, verwendet wurde jedoch kein Wasserstoff und als Metallocen wurden 30,5 mg (0,07 mmol) rac-Isopropylidenbis(indenyl)zirkondichlorid verwendet.
Es wurden 2,25 kg Polypropylenwachs erhalten. Die Metallocenaktivität war 73,8 kg PP/g Metallocen x h.
VZ = 14,5 cm³/g; M_{w} = 13500 g/mol, M_{w}/Mₙ = 2,5; II = 81,5 %,
nᵢₛₒ = 15; Schmp.: 126°C.

### B2) Herstellung der Komponente b) gemäß europäischer Patentanmeldung Nr. 91 118 681.5:

### Beispiel 4

Es wurde verfahren wie in Beispiel 2, es wurde jedoch kein Wasserstoff verwendet. Es wurden 1,50 kg Polypropylen erhalten, entsprechend einer Metallocenaktivität von 319 kg PP/g Metallocen x h.

VZ = 191 cm³/g; MFI (230/5) = 31 dg/min; M_{w} = 200 000 g/mol, M_{w}/Mₙ = 2,3; II = 95,6 %,nᵢₛₒ = 40; Schmp.: 145°C.

### B3) Herstellung der Komponente c) gemäß europäischer Patentanmeldung Nr. 91 118 681.5:

### Beispiel 5

Ein trockener 24 dm³-Reaktor wurde mit Stickstoff gespült und mit 2,4 Ndm³ Wasserstoff sowie 12 dm³ flüssigem Propylen befüllt.
Dann wurden 35 cm³ toluolische Methylaluminoxanlösung (entsprechend 52 mmol Al, mittlerer Oligomerisierungsgrad n = 17) zugegeben.
Parallel dazu wurden 8,5 mg (0,02 mmol) rac-Dimethylsilylbis(2-methyl-1-indenyl)zirkondichlorid in 13,5 cm³ toluolischer Methylaluminoxanlösung (20 mmol Al) gelöst und durch 5minütiges Stehenlassen voraktiviert.
Die Lösung wurde dann in den Reaktor gegeben. Unter kontinuierlicher Zugabe von 50 g Ethylen wurde 1 h bei 55°C polymerisiert.
Die Metallocenaktivität betrug 134 kg C₂/C₃-Copo/g Metallocen x h. Der Ethylengehalt des Copolymeren betrug 4,3 %.
VZ = 289 cm³/g; M_{w} = 402 000 g/mol M_{w}/Mₙ = 2,0; MFI (230/5): 7 dg/min; das Ethylen wurde weitgehend isoliert eingebaut (¹³C-NMR, mittlere Blocklänge C₂ < 1,2).

### Beispiel 6

Ein trockener 150 dm³-Reaktor wurde mit Stickstoff gespült und bei 20°C mit 80 dm³ eines entaromatisierten Benzinschnittes mit dem Siedebereich 100-120°C gefüllt. Dann wurde der Gasraum durch 5-maliges Aufdrücken von 2 bar Propylen und Entspannen stickstofffrei gespült.
Nach Zugabe von 50 l flüssigem Propylen wurden 64 cm³ toluolische Methylaluminoxanlösung (entsprechend 100 mmol Al) zugegeben und der Reaktorinhalt auf 30°C aufgeheizt.
Durch Zudosierung von Wasserstoff wurde ein Wasserstoffgehalt im Gasraum des Reaktors von 0,3 % eingestellt und später dann durch Nachdosierung während der gesamten Polymerisationszeit gehalten (Überprüfung on-Line durch Gaschromatographie).

24,3 mg rac-Dimethylsilylbis(2-methyl-1-indenyl)zirkondichlorid (0,05 mmol) wurden in 32 ml toluolischer Methylaluminoxanlösung (entsprechend 50 mmol Al) gelöst und nach 15 Minuten in den Reaktor gegeben. Die Polymerisation erfolgte in einer 1. Stufe bei 50°C 10 h lang.
In einer 2. Stufe wurden zunächst 1 kg Ethylen schnell zugegeben und weitere 2 kg Ethylen während 4 Stunden kontinuierlich zudosiert. Es wurden 21,5 kg Blockcopolymerpulver erhalten.
VZ = 326 cm³/g; M_{w} = 407 000 g/mol, M_{w}/Mₙ = 3,1; MFI (230/5) = 4,9 dg/min. Das Blockcopolymere enthielt 12,5 % Ethylen und die Fraktionierung ergab einen Gehalt von 24 % Ethylen-Propylen-Kautschuk (EPK) im Copolymeren.

Die Beispiele 1-6 zeigen, wie die Komponenten a), b) und c) hergestellt werden können. Entsprechend dem Stand der Technik können durch Variation von Katalysator, Wasserstoff oder Polymerisationsbedingungen maßgeschneiderte Komponenten erzeugt werden (Molmasse, Taktizität, Comonomergehalt, Comonomereinbau).

### C) Erfindungsgemäße Formmassen:

### Beispiel 7

Durch Extrusion wurde eine Formmasse hergestellt, bestehend aus 50 Gew.-% hochmolekularem isotaktischen Polypropylen und 50 Gew.-% eines Polypropylenwachses.
Die Komponenten hatten folgende charakteristische Basisdaten:

Hochmolekulare Komponente:
VZ = 370 cm³/g; MFI (230/5) = 2,0 dg/min; M_{w} = 467 000 g/mol; M_{w}/Mₙ = 2,3; Schmelzpunkt 155°C; II = 98,0 %, nᵢₛₒ = 80;
Zug-E-Modul (nach DIN 53 457-Z) = 1550 Nmm⁻²
Kugeldruckhärte 79 Nmm⁻² (Preßplatte, getempert, 358 N) und 74 Nmm⁻² (nach DIN 53 456, Spritzplatte); Jzod-Schlagzähigkeit (ISO 180/1 C) bei 23°C 140 mJmm⁻² und bei -30°C 18 mJmm⁻².

Polypropylen-Wachs:
VZ = 18 cm³/g; MFI (230/5) = nicht meßbar; M_{w} = 9600 g/mol; M_{w}/Mₙ = 2,0; Schmelzpunkt 145°C; II = 94,9 %; nᵢₛₒ = 35.

Jeweils 10 kg der Polymerkomponenten wurden gemischt und die Mischung mit 20 g Pentaerithrityl-tetrakis[3-(3,5-di-t-butyl-4-hydroxyphenyl)propionat] gegen chemischen Abbau unter Extrusionsbedingungen stabilisiert.

In den fünf Heizzonen des Extruders (Doppelschneckenextruder ZSK 28, Fa. Werner + Pfleiderer) wurden 140°C (Einzug), 190°C, 250°C, 250°C und 240°C (Düsenplatte) eingestellt. Die Extruderschnecken wurden mit 260 Upm betrieben. Die Massetemperatur der Mischung im Extruder betrug 220°C. An der so hergestellten Formmasse wurden folgende Daten gemessen:
VZ = 200 cm³/g; MFI (230/5) = 42 dg/min; M_{w} = 300 500 g/mol; M_{w}/Mₙ = 10,7; Schmelzpunkt 148°C;
Zug-E-Modul (nach DIN 53 457-Z) = 1800 Nmm⁻²
Kugeldruckhärte 96 Nmm⁻² (Preßplatte, getempert, 358 N) und 92 Nmm⁻² (nach DIN 53 456, Spritzplatte); Jzod-Schlagzähigkeit (ISO 180/1 C) bei 23°C 18 mJmm⁻² und bei -30°C 9 mJmm⁻².

### Beispiel 8

Beispiel 7 wurde wiederholt, die hochmolekulare Komponente (Polypropylen) hatte jedoch folgende Basisdaten:
VZ = 191 cm³/g; MFI (230/5) = 31 dg/min; M_{w} = 200 000 g/mol; M_{w}/Mₙ = 2,3; Schmelzpunkt 145°C; II = 95,6 %; nᵢₛₒ = 40;
Zug-E-Modul = 1400 Nmm⁻²; Kugeldruckhärten 80 bzw. 74 Nmm⁻²; Jzod-Schlagzähigkeit 60 mJmm⁻² bei 23°C und 12 mJmm⁻² bei -30°C.
Die Temperaturen im Extruder betrugen 140°C (Einzug), 190°C, 200°C, 180°C und 170°C (Düsenplatte), die Extruderschnecken wurden mit 120 Upm betrieben und die Massetemperatur war 185 °C.
An der so hergestellten Formmasse wurden folgende Daten gemessen:
VZ = 93 cm³/g; MFI (230/5) = 141 dg/min; M_{w} = 119 000 g/mol; M_{w}/Mₙ = 10,0; Schmelzpunkt 145°C; H_{Schm.} = 97 J/g;
Zug-E-Modul = 1720 Nmm⁻²; Kugeldruckhärten 95 bzw. 90 Nmm⁻²; Jzod-Schlagzähigkeit 10 mJmm⁻² (23°C) und 7 mJmm⁻² (-30°C).

### Vergleichsbeispiel 1

Es wird verfahren wie in Beispiel 7, die niedermolekulare Komponente ist jedoch kein Polypropylenwachs, sondern ein Polypropylen mit niedriger Molmasse.
Diese Komponente hatte folgende Basisdaten:
VZ = 56 cm³/g; MFI (230/5) = nicht meßbar; M_{w} = 52 500 g/mol; M_{w}/Mₙ = 2,1; Schmelzpunkt = 145°C; II = 95,0 %; nᵢₛₒ = 34.
Die Temperaturen im Extruder betrugen 140°C (Einzug) 190°C, 250°C, 240°C und 240°C (Düsenplatte), die Extruderschnecken wurden mit 260 Upm betrieben und die Massetemperatur war 220°C.
An der so hergestellten Formmasse wurden folgende Daten gemessen: VZ = 202 cm³/g; MFI (230/5) = 39 dg/min; M_{w} = 296 000 g/mol; M_{w}/Mₙ = 7,9; Schmelzpunkt 148°C;
Zug-E-Modul = 1280 Nmm⁻²; Kugeldruckhärten 77 bzw. 71 Nmm⁻²; Jzod-Schlagzähigkeit 65 mJmm⁻² (23°C) und 11 mJmm⁻² (-30°C).

### Vergleichsbeispiel 2

Es wird verfahren wie in Beispiel 7 bzw. Vergleichsbeispiel 1, die niedermolekulare Komponente ist kein Polypropylenwachs, sondern ein niedermolekulares PP mit folgenden Basisdaten:
VZ = 111 cm³/g; MFI (230/2,16) = 93 dg/min; M_{w} = 108 500 g/mol; M_{w}/Mₙ = 2,1; Schmelzpunkt 146°C; II = 95 %; nᵢₛₒ = 34.
Die Temperaturen im Extruder betrugen 155°C (Einzug), 215°C, 240°C, 240°C und 250°C (Düsenplatte),die Extruderschnecken wurden mit 190 Upm betrieben und die Massetemperatur war 250°C.
An der so hergestellten Formmasse wurden folgende Daten gemessen:
VZ = 206 cm³/g; MFI (230/5) = 32 dg/min; M_{w} = 248 000 g/mol; M_{w}/Mₙ = 3,4; Schmelzpunkt 151°C; H_{Schm.} = 97 J/g.
Zug-E-Modul = 1432 Nmm⁻²; Kugeldruckhärten 84 bzw. 75 Nmm⁻²; Jzod-Schlagzähigkeit 69 mJmm⁻² (23°C) und 12 mJmm⁻² (-30°C).

### Vergleichsbeispiel 3

Vergleichsbeispiel 1 wird wiederholt, die hochmolekulare Komponente wies jedoch folgende Basisdaten auf:
VZ = 769 cm³/g; MFI (230/5) = 0,15 dg/min; M_{w} = 996 500 g/mol; M_{w}/Mₙ = 2,3; Schmelzpunkt 156°C; II = 98,1 %; nᵢₛₒ = 82.
Die Temperaturen im Extruder betrugen 155°C (Einzug), 240°C, 260°C, 260°C und 250°C (Düsenplatte), die Extruderschnecken wurden mit 150 Upm betrieben und die Massetemperatur war 270°C.
An der so hergestellten Formmasse wurden folgende Daten gemessen:
VZ = 402 cm³/g; MFI (230/5) = 7,5 dg/min; M_{w} = 714 000 g/mol; M_{w}/Mₙ = 14,2; Schmelzpunkt 150°C;
Zug-E-Modul = 1315 Nmm⁻²; Kugeldruckhärten 80 bzw. 77 Nmm⁻²; Jzod-Schlagzähigkeit 60 mJmm⁻² (23°C) und 12 mJmm⁻² (-30°C).

Die Vergleichsbeispiele belegen vor dem Hintergrund der Beispiele, daß nicht eine möglichst breite Molmassendispersität M_{w}/Mₙ zur Erzielung hoher Steifigkeit (Kugeldruck, Zug-E-Modul) ausschlaggebend ist, sondern der Typ der niedermolekularen Komponente der erfindungsgemäß ein Polyolefinwachs ist.

### Beispiel 9 und Beispiel 10

Im Gegensatz zu den vorhergehenden Beispielen 7 und 8 wurde die erfindungsgemäße Formmasse nicht durch Mischen unterschiedlicher Polymerpulver hergestellt, sondern die Herstellung der Formmasse erfolgte in einer zweistufigen Polymerisation direkt im Reaktor:

### Beispiel 9

Ein 24 dm³-Reaktor wurde mit Propylen gespült und mit 12 l flüssigem Propylen sowie mit 35 cm³ toluolischer Methylaluminoxanlösung (entsprechend 52 mmol Al, mittlerer Oligomerisierungsgrad n = 20) befüllt.
Parallel dazu wurden 3,0 mg (0,006 mmol) rac-Dimethylsilylbis(2-methyl-1-indenyl)-zirkondichlorid in 13,5 cm³ toluolischer Methylaluminoxanlösung (20 mmol Al) gelöst und in den Reaktor gegeben.
Bei 70°C wurde 90 Minuten polymerisiert. Dann wurden 120 Ndm² Wasserstoff in den Reaktor gegeben und weitere 30 Minuten polymerisiert. Es wurden 2,41 kg Polymer erhalten.
Das Polymer wurde mit 4,8 g Pentaerithrityltetrakis[3-(3,5-di-t-butyl-4-hydroxyphenyl)propionat] gegen chemischen Abbau unter

Extrusionsbedingungen
stabilisiert und granuliert. In den fünf Heizzonen des Extruders wurden 140°C (Einzug), 190°C, 200°C, 200°C und 180°C (Düsenplatte) eingestellt, die Extruderschnecke wurde mit 200 Upm betrieben und die Massetemperatur war 185°C.
An der so hergestellten Formmasse wurden folgende Daten gemessen:
VZ = 125 cm³/g; MFI (230/5) = 92 dg/min; M_{w} = 161 000 g/mol, M_{w}/Mₙ = 8,9;
Schmp.: 146°C, Δ H_{schm.} = 100 J/g; Zug-E-Modul = 1760 Nmm⁻²;
Kugeldruckhärten 94 bzw. 90 Nmm⁻²; Jzod-Schlagzähigkeit 19 mJmm⁻² (23°C) und 12 mJmm⁻² (-30°C).

### Beispiel 10

Ein 24 dm³-Reaktor wurde mit Propylen gespült und mit 12 l flüssigem Propylen sowie mit 35 cm³ toluolischer Methylaluminoxanlösung (entsprechend 52 mmol Al, mittlerer Oligomerisierungsgrad n = 20) befüllt.
Parallel dazu wurden 3,0 mg (0,006 mmol) rac-Dimethylsilylbis(2-methyl-1-indenyl)-zirkondichlorid und 15,0 mg (0,03 mmol) rac-Isopropylidenbis(indenyl)-zirkondichlorid in 13,5 cm³ toluolischer Methylaluminoxanlösung (20 mmol Al) gelöst und in den Reaktor gegeben.
Bei 70°C wurde 1,5 h polymerisiert. Es wurden 2,65 kg Polymer erhalten. Analog zu Beispiel 9 wurde durch Granulierung eine Formmasse hergestellt, an der folgende Daten gemessen wurden:
VZ = 100 cm³/g; MFI (230/5) = 120 dg/min; M_{w} = 125 000 g/mol, M_{w}/Mₙ = 11,5;
Schmp.: 140°C (breit); Zug-E-Modul = 1820 Nmm⁻²; Kugeldruckhärten 90 bzw. 88 Nmm⁻²; Jzod-Schlagzähigkeit 32 mJmm⁻² (23°C) und 17 mJmm⁻² (-30°C).

### Beispiel 11

Beispiel 7 wurde wiederholt, die hochmolekulare Komponente (Ethylen/Propylen-Copolymer) hatte jedoch folgende Basisdaten:
VZ = 289 cm³/g; M_{w} = 402 000 g/mol; M_{w}/Mₙ = 2,0; MFI (230/5) = 7 dg/min; Ethylengehalt des Polymeren 4,3 %, Einbau nach ¹³C-NMR: mittlere Blocklänge
C₂ < 1,2; vgl. Bsp. 5.
Die Temperaturen im Extruder waren:
140°C (Einzug), 200°C, 200°C, 180°C und 180°C (Düsenplatte), die Extruderschnecken wurde mit 200 Upm betrieben und die Massetemperatur war 190°C.
An der so hergestellten Formmasse wurden folgende Daten gemessen:
VZ = 145 cm³/g; MFI (230/5) = 72 dg/min; M_{w} = 198 000 g/mol;
M_{w}/Mₙ = 9,6; Zug-E-Modul = 1580 Nmm⁻²; Kugeldruckhärte 86 bzw. 80 Nmm⁻² Jzod-Schlagzähigkeit 100 mJmm⁻² (23°C).

### Beispiel 12

Beispiel 7 wurde wiederholt, die hochmolekulare Komponente hatte jedoch folgende Basisdaten:
VZ = 326 cm³/g; M_{w} = 407 000 g/mol, M_{w}/Mₙ = 3,1, MFI (230/5) = 4,9 dg/min; Kugeldruckhärte 60 Nmm⁻² (Preßplatte). Es handelt sich um ein Blockcopolymer mit einem Ethylengehalt von 12,5 Gew.-% die Fraktionierung ergab einen Gehalt von 24 % C₂/C₃-Kautschuk (EPK); vgl. Bsp. 6.
Die Temperaturen im Extruder waren 140°C (Einzug), 220°C, 220°C, 200°C und 180°C (Düsenplatte), die Extruderschnecken wurden mit 200 Upm betrieben und die Massetemperatur war 220°C.
An der so hergestellten Formmasse wurden folgende Daten gemessen:
VZ = 196 cm³/g; MFI (230/5) = 30 dg/min; M_{w} = 345 000 g/mol, M_{w}/Mₙ = 12,4; Zug-E-Modul = 1180 Nmm⁻², Kugeldruckhärte 71 Nmm⁻² bzw. 70 Nmm⁻², Jzod-Schlagzähigkeit: ohne Bruch (23°C).

### Beispiel 13

Durch Extrusion wurde eine Formmasse hergestellt, bestehend aus 50 Gew.-% hochmolekularem isotaktischen Polypropylen und 50 Gew.-% eines Polypropylenwachses. Die Komponenten hatten folgende charakteristischen Basisdaten:
Hockmolekulare Komponenten:
VZ = 393 cm³/g; MFI (230/5) = 18 dg/min; M_{w} = 498 000 g/mol, M_{w}/Mₙ = 2,1; Schmelzpunkt = 152°C; II = 97,0 % nᵢₛₒ = 65.

### Polypropylenwachs:

VZ = 35 cm³/g; MFI (230/5) nicht meßbar; M_{w} = 26 500 g/mol, M_{w}/Mₙ = 2,1; Schmelzpunkt = 145°C; II = 94,0 %, nᵢₛₒ = 33.

Jeweils 10 Kg der Polymerkomponenten wurden gemischt und die Mischung mit 20 g Pentaerithrityl-tetrakis[3-(3,5-di-t-butyl-4-hydroxyphenyl)propionat] gegen chemischen Abbau unter Extrusionsbedingungen stabilisiert. Die Extrusion/Granulierung wurde analog Beispiel 7 durchgeführt. An der so hergestellen Formmasse wurden folgende Daten gemessen:
VZ = 196 cm³/g; MFI (230/5) = 43 dg/min; M_{w} = 326 000 g/mol; M_{w}/Mₙ 0 18,3; Schmelzpunkt: 153°C;
Zug-E-Modul = 1950 Nmm⁻² Kugeldruckhärte 97 Nmm⁻² (Preßplatte, getempert 3 h bei 140°C; 358 N) und 90 Nmm⁻² (nach DIN 53 456, Spritzplatte); Izod-Schlagzähigkeit (ISO 180/1C) bei 23°C 34,5 mJmm⁻² und bei -30°C 9,4 mJmm⁻².

### Beispiel 14

Es wurde verfahren wie in Beispiel 13, die Wachskomponente hatte jedoch folgende Basisdaten:
VZ = 15 cm³/g; M_{w} = 7300 g/mol, M_{w}/Mₙ = 2,0; Schmelzpunkt = 139°C; II = 93,7 %, nᵢₛₒ = 28.

An der so hergestellten Formmasse wurden folgende Daten gemessen:
VZ: 15 cm³/g; M_{w} = 7300 g/mol, M_{w}/Mₙ = 2,0; Schmelzpunkt = 139°C; II = 93,7 %, nᵢₛₒ = 28.
An der so hergestellten Formmasse wurden folgende Daten gemessen:
US = 195 cm³/g; MFI (230/5) = 51 dg/min; M_{w} = 318 000 g/mol, M_{w}/Mₙ = 35,7; Schmelzpunkt = 150°C; Zug-E-Modul = 2092 Nmm⁻²;
Kugeldruckhärten 91 Nmm⁻² und 91 Nmm⁻² (Preßplatte bzw. Spritzplatte, 358 N).

### Beispiel 15

Es wurde verfahren wie in Beispiel 14, zusätzlich wurden jedoch noch 10 Kg einer weiteren hochmolekularen Komponente für die Formmasse verwendet, die folgende Basisdaten aufwiesen:
VZ = 197 cm³/g; MFI (230/5) = 30 dg/min; M_{w} = 198 500 g/mol, M_{w}/Mₙ = 2,1; Schmelzpunkt = 148°C, II = 96,4 % nᵢₛₒ = 50.
An der so hergestellten Formmasse wurden folgende Daten gemessen:
VZ = 192 cm³/g; MFI (230/5) = 33 dg/min; M_{w} = 285 000 g/mol, M_{w}/Mₙ = 16,4; Schmelzpunkt 150°C; Zug-E-Modul = 1853 Nmm⁻² (Kugeldruckhärten 88 Nmm⁻² bzw. 84 Nmm⁻² (Preßplatte bzw. Spritzplatte, 358 N).

### Beispiel 16

Es wurde verfahren wie in Beispiel 13, die Wachskomponente hatte jedoch folgende Basisdaten:
VZ = 45 cm³/g; M_{w} = 33 400 g/mol, M_{w}/Mₙ = 1,9; Schmelzpunkt = 140°C; II = 94,0 % nᵢₛₒ = 30.
An der so hergestellten Formmasse wurden folgende Daten gemessen:
VZ: 202 cm³/g; MFI (230/5) = 34 dg/min; M_{w} = 320 000 g/mol; M_{w}/Mₙ = 9,0; Schmelzpunkt = 152°C; Zug-E-Modul = 1540 Nmm⁻²; Kugeldruckhärten 87 Nmm⁻² bzw. 83 Nmm⁻² (Preßplatte bzw. Spritzplatte, 358 N); Jzod-Schlagzähigkeit 58,1 mJmm⁻² (23°C) und 11,5 mJmm⁻² (-30°C).

### Beispiel 17

Es wurde verfahren wie in Beispiel 14, die hochmolekulare Komponente wies jedoch folgende Basisdaten auf:
VZ = 224 cm³/g; MFI (230/5) = 20,5 dg/min; M_{w} = 259 000 g/mol, M_{w}/Mₙ = 2,2; Schmelzpunkt = 139°C; II = 93,5 % nᵢₛₒ = 25; Zug-E-Modul = 1350 Nmm⁻²; Kugeldruckhärten 68 bzw. 64 Nmm⁻² (Preßplatte bzw. Spritzplatte, 358 N).
An der so hergestellten Formmasse wurden folgende Daten gemessen:
VZ = 122 cm³/g; MFI (230/5) = 195 dg/min; M_{w} = 161 500 g/mol, M_{w}/Mₙ = 18,5; Schmelzpunkt = 142°C; Zug-E-Modul = 1619 Nmm⁻²;
Kugeldruckhärten 78 bzw. 73 Nmm⁻² (Preßplatte bzw. Spritzplatte, 368 N).

### Beispiel 18

Es wurde verfahren wie in Beispiel 14, die hochmolekulare Komponente wies jedoch folgende Basisdaten auf:
VZ = 271 cm³/g; MFI (230/5) = 6,0 dg/min; M_{w} = 289 500 g/mol, M_{w}/Mₙ = 2,0; Schmelzpunkt = 160°C; II = 98,9 % nᵢₛₒ = 109; Zug-E-Modul = 1623 Nmm⁻²; Kugeldruckhärten 90 bzw. 76 Nmm⁻² (Preßplatte bzw. Spritzplatte, 358 N).
An der so hergestellten Formmasse wurden folgende Daten gemessen:
VZ = 154 cm³/g; M_{w} = 168 000 g/mol, M_{w}/Mₙ = 17,2; MFI (230/5) = 74 dg/min; Schmelzpunkt = 159°C; Zug-E-Modul = 2105 Nmm⁻²; Kugeldruckhärten 110 bzw. 96 Nmm⁻² (Preßplatte bzw. Spritzplatte, 368 N).

### Beispiel 19

Es wurde verfahren wie in Beispiel 18, die Wachskomponente wies jedoch folgende Basisdaten auf:
VZ = 15 cm³/g; M_{w} = 8100 g/mol, M_{w}/Mₙ = 1,8; Schmelzpunkt = 160°C; II = 98,0 % nᵢₛₒ = 130.
An der so hergestellten Formmasse wurden folgende Daten gemessen:
VZ = 161 cm³/g; M_{w} = 170 500 g/mol, M_{w}/Mₙ = 17,0; MFI 8230/5) = 69 dg/min; Schmelzpunkt = 160°C; Zug-E-Modul = 2185 Nmm⁻²; Kugeldruckhärten 115 bzw. 98 Nmm⁻² (Preßplatte- bzw. Spritzplattenmessung, 368 N).

### Beispiel 20

Durch Extrusion wurde eine Formmasse hergestellt, bestehend aus 80 Gew.-% hochmolekularem iso-taktischen Polypropylen und 20 Gew.-% eines Polypropylens. Mischung, Stabilisierung und Extrudsion erfolgten wie in Beispiel 13. Die Basisdaten der Komponenten war:
Hochmolekulare Komponente:
VZ = 197 cm³/g; MFI (230/5) = 32 dg/min; M_{w} = 205 000 g/mol, M_{w}/Mₙ = 2,3; Schmelzpunkt = 148°C; II = 96,2 % nᵢₛₒ = 51; Zug-E-Modul = 1350 Nmm⁻²; Kugeldruckhärten 79 bzw. 74 Nmm⁻² (Preßplatte bzw. Spritzplatte, 358 N).
Wachskomponente (Polypropylen):
VZ = 14 cm³/g; M_{w} = 7600 g/mol, M_{w}/Mₙ = 2,0; Schmelzpunkt = 140°C; II = 94,3 %, nᵢₛₒ = 31.
An der erfindungsgemäßen Formmasse beziehungsweise an den daraus hergestellten Formkörpern wurden folgende Daten gemessen:
VZ = 155 cm³/g; MFI (230/5) = 71 dg/min; M_{w} = 196 000 g/mol, M_{w}/Mₙ = 10,0; Schmelzpunkt = 148°C; Zug-E-Modul = 1589 Nmm⁻²;
Kugeldruckhärten 85 bzw. 79 Nmm⁻² (Preßplatte bzw. Spritzplatte, 358 N).

### Beispiele 21 - 27

Es wurde verfahren wie in Beispiel 7, es wurden jedoch unterschiedliche Mengen der Polypropylen-Wachskomponenten verwendet. Die Ergebnisse sind der Tabelle zu entnehmen.

| Beispiel | Gew.-% Polypropylenwachs | Kugeldruckhärte [Nmm⁻²] (Preßplatte, getempert, 358 N) |
|---|---|---|
| 21 | 9 | 85 |
| 22 | 17 | 87 |
| 23 | 23 | 91 |
| 23 | 29 | 90 |
| 25 | 33 | 94 |
| 26 | 37,5 | 93 |
| 27 | 43 | 93 |

## Patentansprüche

1. Polyolefinformmasse, im wesentlichen bestehend aus
a) einem Polyolefinwachs, welches sich von einem Olefin mit mindestens 3 C-Atomen der Formel R^{a}-CH = CH-R^{b} ableitet, worin R^{a} und R^{b} gleich oder verschieden sind und Wasserstoff oder C₁-C₁₅-Alkyl bedeuten oder R^{a} und R^{b} mit den sie verbindenden Atomen einen Ring bilden, mit einer Molmasse M_{w} von 1000 bis 50000 g/mol, einer Molmassendispersität M_{w}/Mₙ von 1,8 bis 4,0 einer Viskositätszahl von 2 bis 50 cm³/g, einem Schmelzpunkt von 120 bis 160°C
und
b) einem Polyolefin, welches sich von dem unter a) genannten Olefin ableitet, mit einer Molmasse M_{w} > 100 000 g/mol, einer Molmassendispersität M_{w}/Mₙ von 1,8 bis 4,0 einer Viskositätszahl > 80 cm³/g und einem Schmelzpunkt von 120 bis 160°C oder anstelle von b) aus
c) einem Olefincopolymer, welches sich von mindestens zwei verschiedenen Olefinen der Formel R^{a}-CH = CH-R^{b} ableitet, worin R^{a} und R^{b} gleich oder verschieden sind und Wasserstoff oder C₁-C₁₅-Alkyl bedeuten oder R^{a} und R^{b} mit den sie verbindenden Atomen einen Ring bilden, mit einer Molmasse
M_{w} > 100 000 g/mol, einer Molmassendispersität M_{w}/Mₙ von 1,8 bis 4,0, einer Viskositätszahl > 80 cm³/g und einem Schmelzpunkt von 90 bis 160°C.

2. Polyolefinformmasse gemäß Anspruch 1, dadurch gekennzeichnet, daß die Komponente a) ein Polypropylenwachs ist.

3. Polyolefinformmasse gemäß Anspruch 1 oder 2, dadurch gekennzeichnet, daß die Komponente b) Polypropylen ist.

4. Polyolefinformmasse gemäß einem oder mehreren der Ansprüche 1 bis 3, dadurch gekennzeichnet, daß die Komponente c) ein Ethylen/Propylen-Copolymer ist.

5. Polyolefinformmasse, im wesentlichen bestehend aus 20 bis 99 Gew.-% einer Formmasse gemäß einem oder mehreren der Ansprüche 1 bis 4 und 1 bis 80 Gew.-% eines Kautschuks mit einer Glastemperatur unter -20°C.

6. Polyolefinformmasse gemäß einem oder mehreren der Ansprüche 1 bis 5, dadurch gekennzeichnet, daß sie zusätzlich Stabilisatoren, Antioxidantien, UV-Absorber, Lichtschutzmittel, Metalldesaktivatoren, Radikalfänger, Füllstoffe und Verstärkungsmittel, Compatibilizer, Weichmacher, Gleitmittel, Emulgatoren, Pigmente, optische Aufheller, Flammschutzmittel, Antistatika oder Treibmittel enthält.

7. Verwendung einer Formmasse gemäß einem oder mehreren der Ansprüche 1 bis 6 zur Herstellung von Formkörpern.

8. Formkörper, herstellbar aus einer Formmasse gemäß einem oder mehreren der Ansprüche 1 bis 6.

## Revendications

1. Compositions moulables de polyoléfines, constituée essentiellement par
a) une cire de polyoléfine qui dérive d'une oléfine d'au moins 3 atomes de carbone de formule R^{a}-CH=CH-R^{b}, dans laquelle R^{a} et R^{b} sont identiques ou différents et représentent un atome d'hydrogène ou un reste alkyle en C₁-C₁₅, ou R^{a} et R^{b} forment un cycle avec les atomes auxquels ils sont liés, et qui a une masse moléculaire M_{w} de 1000 à 50 000 g/mole, une distribution des masses moléculaires M_{W}/Mₙ comprise entre 1,8 et 4,0, un indice de viscosité de 2 à 50 cm³/g, et un point de fusion de 120 à 160°C;
et
b) une polyoléfine qui dérive de l'oléfine citée sous a), et qui a une masse moléculaire M_{W} supérieure à 100 000 g/mole, une distribution des masses moléculaires M_{w}/Mₙ comprise entre 1,8 et 4,0, un indice de viscosité supérieur à 80 cm³/g et un point de fusion de 120 à 160°C;
ou, à la place de b)
c) un copolymère d'oléfines qui dérive d'au moins deux oléfines différentes de formule R^{a}-CH=CH-R^{b}, dans laquelle R^{a} et R^{b} sont identiques ou différents et représentent un atome d'hydrogène ou un reste alkyle en C₁-C₁₅, ou R^{a} et R^{b} forment un cycle avec les atomes auxquels ils sont liés, et qui a une masse moléculaire M_{W} supérieure à 100 000 g/mole, une distribution des masses moléculaires M_{W}/Mₙ comprise entre 1,8 et 4,0, un indice de viscosité supérieur à 80 cm³/g et un point de fusion de 90 à 160°C.

2. Composition moulable de polyoléfines selon la revendication 1, caractérisée en ce que le constituant a) est une cire de polypropylène.

3. Composition moulable de polyoléfines selon la revendication 1 ou 2, caractérisée en ce que le constituant b) est un polypropylène.

4. Composition moulable de polyoléfines selon l'une ou plusieurs des revendications 1 à 3, caractérisée en ce que le constituant c) est un copolymère éthylène/propylène.

5. Composition moulable de polyoléfines constituée essentiellement de 20 à 99 % en masse d'une composition moulable selon l'une ou plusieurs des revendications 1 à 4 et 1 à 80 % en masse d'un caoutchouc ayant une température de transition vitreuse inférieure à -20°C.

6. Composition moulable de polyoléfines selon l'une ou plusieurs des revendications 1 à 5, caractérisée en ce qu'elle contient en plus des stabilisants, des antioxydants, des absorbants d'UV, des agents de protection contre la lumière, des désactivateurs de métaux, des fixateurs de radicaux, des charges et des agents renforçants, des agents de compatibilité, des plastifiants, des lubrifiants, des émulsionnants, des pigments, des azurants optiques, des agents ignifuges, des agents antistatiques ou des agents soufflants.

7. Utilisation d'une composition moulable selon l'une ou plusieurs des revendications 1 à 6 pour la production de corps moulés.

8. Corps moulés pouvant être produits à partir d'une composition moulable selon l'une ou plusieurs des revendications 1 à 6.

## Claims

1. A polyolefin molding composition essentially comprising
a) a polyolefin wax derived from an olefin having at least 3 carbon atoms, of the formula R^{a}-CH=CH-R^{b}, in which R^{a} and R^{b} are identical or different and are hydrogen or C₁-C₁₅-alkyl, or R^{a} and R^{b}, together with the atoms connecting them, form a ring, having a molecular weight M_{W} of from 1000 to 50,000 g/mol, a molecular weight dispersity M_{W}/Mₙ of from 1.8 to 4.0, a viscosity index of from 2 to 50 cm³/g and a melting point of from 120 to 160°C, and
b) a polyolefin derived from the olefin mentioned under a), having a molecular weight M_{W} of > 100,000 g/mol, a molecular weight dispersity M_{W}/Mₙ of from 1.8 to 4.0, a viscosity index of > 80 cm³/g and a melting point of from 120 to 160°C, or, instead of b),
c) an olefin copolymer derived from at least two different olefins of the formula R^{a}-CH=CH-R^{b}, in which R^{a} and R^{b} are identical or different and are hydrogen or C₁-C₁₅-alkyl, or R^{a} and R^{b}, together with the atoms connecting them, form a ring, having a molecular weight M_{W} of > 100,000 g/mol, a molecular weight dispersity M_{W}/Mₙ of from 1.8 to 4.0, a viscosity index of > 80 cm³/g and a melting point of from 90 to 160°C.

2. A polyolefin molding composition as claimed in claim 1, wherein component a) is a polypropylene wax.

3. A polyolefin molding composition as claimed in claim 1 or 2, wherein component b) is polypropylene.

4. A polyolefin molding composition as claimed in one or more of claims 1 to 3, wherein component c) is an ethylene-propylene copolymer.

5. A polyolefin molding composition essentially comprising from 20 to 99 % by weight of a molding composition as claimed in one or more of claims 1 to 4 and from 1 to 80 % by weight of a rubber having a glass transition temperature of below -20°C.

6. A polyolefin molding composition as claimed in one or more of claims 1 to 5, which additionally contains stabilizers, antioxidants, UV absorbers, light protection agents, metal deactivators, free-radical scavengers, fillers and reinforcing agents, compatibilizers, placticizers, lubricants, emulsifiers, pigments, optical brighteners, flameproofing agents, antistatics or blowing agents.

7. A method of using a molding composition as claimed in one or more of claims 1 to 6 for the production of moldings.

8. A molding which can be produced from a molding composition as claimed in one or more of claims 1 to 6.
